(19) Europäisches Patentamt / European Patent Office / Office européen des brevets

(11) **EP 4 613 809 A1**

(12) **EUROPEAN PATENT APPLICATION**

(43) Date of publication:
**10.09.2025 Bulletin 2025/37**

(21) Application number: **25159341.4**

(22) Date of filing: **21.02.2025**

(51) International Patent Classification (IPC):
***C08L 23/12*** *(2006.01)*

(52) Cooperative Patent Classification (CPC):
(C-Sets available)
C08L 2205/03; C08L 2207/20                (Cont.)

(84) Designated Contracting States:
**AL AT BE BG CH CY CZ DE DK EE ES FI FR GB
GR HR HU IE IS IT LI LT LU LV MC ME MK MT NL
NO PL PT RO RS SE SI SK SM TR**
Designated Extension States:
**BA**
Designated Validation States:
**GE KH MA MD TN**

(30) Priority: **07.03.2024  EP 24162154**

(71) Applicant: **Basell Poliolefine Italia S.r.l.
20121 Milano (IT)**

(72) Inventors:
• **HEES, Timo
  65926 Frankfurt/M. (DE)**
• **CAVALIERI, Claudio
  44122 Ferrara (IT)**

(74) Representative: **LyondellBasell
c/o Basell Poliolefine Italia
Intellectual Property
P.le Donegani 12
44122 Ferrara (IT)**

(54) **POLYOLEFIN COMPOSITIONS OBTAINED FROM RECYCLED POLYOLEFINS**

(57)    A polyolefin composition comprising:
A) from 35 wt% to 65 wt% of a recycled polypropylene composition;
B) from 35 wt% to 65 wt% of a virgin polypropylene composition comprising:
(b1) from 69 wt% to 92 wt%, of a propylene homopolymer, having:
- a fraction soluble in xylene at 25°C lower than 3.0 wt%; and

- a Melt Flow Rate (ISO 1133 230°C/2.16 kg) ranging from 58 to 118 g/10 min;

(b2) from 8 wt% to 31 wt % of a copolymer of propylene and ethylene having:
- units derived from ethylene, measured according to $^{13}C$-NMR, in an amount ranging from 27.8 wt% to 59.0 wt%.

EP 4 613 809 A1

(52) Cooperative Patent Classification (CPC): (Cont.)

C-Sets
**C08L 23/12, C08L 23/12, C08L 23/0815;**
**C08L 23/12, C08L 23/12, C08L 23/142;**
**C08L 23/12, C08L 23/12, C08L 23/16**

**Description**

FIELD OF THE INVENTION

The present disclosure relates to polypropylene compositions containing recycled elastomeric material that can be used in preparation of extruded articles.

BACKGROUND OF THE INVENTION

Polyolefin compositions having elastic properties while maintaining a good thermoplastic behavior have been used in many application fields, due to the valued properties which are typical of polyolefins, such as chemical inertia, mechanical properties and nontoxicity. Moreover, they can be advantageously transformed into finished products with the same techniques used for thermoplastic polymers. In particular, flexible polymer materials are widely used in the medical field, as well as for packaging, extrusion coating and electrical wires and cables covering.

Elastic polypropylene compositions retaining good thermoplastic behavior have been obtained in the art by way of sequential copolymerization of propylene, optionally containing minor quantities of olefin comonomers, and then ethylene/propylene or ethylene/alpha-olefin copolymers mixtures. Catalysts based on halogenated titanium compounds supported on magnesium chloride are commonly used for this purpose. For instance, EP-A-472 946 describes flexible elastoplastic polyolefin compositions comprising, in parts by weight: A) 10-50 parts of an isotactic propylene homopolymer or copolymer; B) 5-20 parts of an ethylene copolymer, insoluble in xylene at room temperature; and C) 40-80 parts of an ethylene/propylene copolymer containing less than 40% by weight of ethylene and being soluble in xylene at room temperature; the intrinsic viscosity of said copolymer is preferably from 1.7 to 3 dl/g. Said compositions are relatively flexible and have good elastic properties.

In addition, polyolefin compositions, although being appreciated in terms of performances, give raise to concerns in terms of sustainability with particular reference to the fact that their production is based on the use of non-renewable sources.

As a result, a common attempt to mitigate the problem is that of replacing, at least in part, virgin polyolefin compositions with variable amounts of recycled plastic materials.

The recycled plastic polyolefin derive from streams of post-consumer waste (PCW) or post-industrial waste (PIW).

One of the key problems in polyolefin recycling, is the difficulty to quantitatively separate the various types of polymers so that the commercially available recycled products are almost invariably contaminated with heterogeneous materials of various source.

This fact leads to the consequence that polymer compositions including recycled materials are perceived of being affected by lower reliability and lower performances with respect to the compositions made of solely virgin polymers.

It has now been unexpectedly found that it is possible to have an improved property profile especially in terms of elongation at break when a recycled polymers is added to a virgin polypropylene.

SUMMARY OF THE INVENTION

It is therefore an object of the present disclosure a polyolefin composition comprising:

A) from 35 wt% to 65 wt% of a recycled polypropylene composition;
B) from 35 wt% to 65 wt% of a virgin polypropylene composition comprising:

(b1) from 69 wt% to 92 wt%, of a propylene homopolymer, having:

- a fraction soluble in xylene at 25°C lower than 3.0 wt%; and
- a Melt Flow Rate (ISO 1133 230°C/2.16 kg) ranging from 58 to 118 g/10 min;

(b2) from 8 wt% to 31 wt % of a copolymer of propylene and ethylene having:

- units derived from ethylene, measured according to $^{13}$C-NMR, in an amount ranging from 27.8 wt% to 59.0 wt%;

said polypropylene composition (B) being further characterized by:

- a Melt Flow Rate (ISO 1133 230°C/5.0 kg) ranging from 26.8 to 57.2 g/10 min;

- an amount of fraction soluble in xylene at 25°C ranging from 8.0 wt% to 31.0 wt%;
- intrinsic viscosity of the fraction soluble in xylene at 25°C, measured in tetrahydronaphthalene at 135 °C, ranging from 1.2 to 3.8 dl/g and,
- total content of ethylene, measured according to $^{13}$C-NMR method described in the specification, ranging from 4.5 wt% to 18.5 wt%;

in the said composition the sum of b1) and b2), being referred to the total weight of b1) and b2), is 100, and the sum of the amounts of (A) and (B) being referred to the total weight of (A) and (B) is 100;
wherein the recycled polypropylene composition (A) has

i) a propylene content higher than 50 wt%
iii) Melt Flow Rate (ISO 1133 230°C/2.16 kg) ranging from 5.0 to 100.0 g/10 min;
iv) Tensile modulus, measured according to ISO 527-2, ranging from 800 N/mm$^2$ to 1700 N/mm$^2$
v) Charpy impact test at 23°C, determined according to ISO 179-1eA, and ISO 1873-2, ranging from 4.0 KJ/m$^2$ to 12.0 KJ/m$^2$;
vi) Elongation at break, measured according to ISO 527, ranging from 30 % to 90 %;
vii) the FTIR spectrum of film recorded as described in the example section comprises at least two adsorption bands at least two wavenumbers (cm-1) selected from:
3303 $\pm$2 cm-1; 1726 $\pm$2 , 1642 $\pm$2 cm-1; 1600 $\pm$2 cm$^{-1}$ 1550 $\pm$2 cm-1; 1491$\pm$2 cm-1; 1451$\pm$2 cm-1; 1726 $\pm$2 cm-1; 1600 $\pm$2 cm-1, 748 $\pm$2 cm-1; 906 $\pm$2 cm$^{-1}$; 839 $\pm$2 cm$^{-1}$, 818 $\pm$2 cm$^{-1;}$ 748 $\pm$2 cm$^{-1}$; 695 $\pm$2 cm$^{-1}$.

BRIEF DESCRIPTION OF THE DRAWINGS

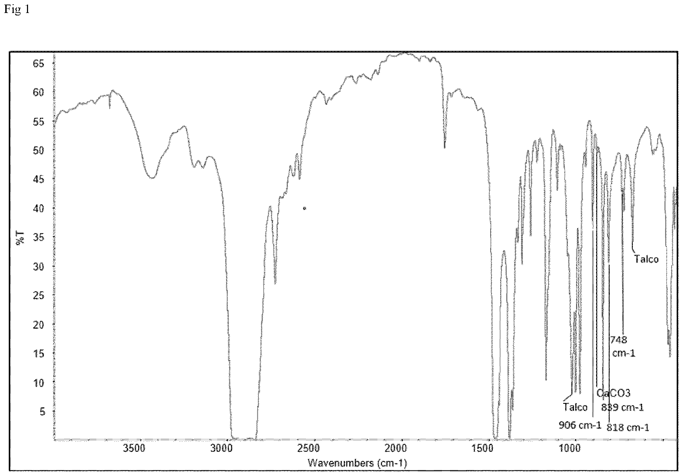

Fig 1 shows the FTIR spectrum of the recycled polymer grade sold by Vita plastics used as component A in the examples.

DETAILED DESCRIPTION OF THE INVENTION

It is therefore an object of the present disclosure a recycled polyolefin composition comprising:

A) from 35 wt% to 65 wt%; preferably from 40 wt% to 60 wt%; more preferably from 45 wt% to 55 wt%; of a recycled polypropylene composition;
B) from 35 wt% to 65 wt%; preferably from 40 wt% to 60 wt%; more preferably from 45 wt% to 65 wt%; of a virgin polypropylene composition comprising:

- (b1) from 69 wt% to 92 wt%, preferably from 74 wt% to 89 wt%; more preferably from 79 wt% to 87 wt% of a propylene homopolymer, having:

  - a fraction soluble in xylene at 25°C lower than 3.0 wt%; preferably being higher than 0.5 wt% and
  - a Melt Flow Rate (ISO 1133 230°C/5.0 kg) ranging from 58.0 to 118.0 g/10 min; preferably ranging from 63.0 to 113.5 g/10 min; more preferably ranging from 68.0 to 108.0 g/10 min;

- (b2) from 8 wt% to 31 wt%; preferably from 11 wt% to 26 wt%; more preferably from 13 wt% to 21 wt% of a copolymer of propylene and ethylene having:

  - units derived from ethylene, measured according to $^{13}$C-NMR, in an amount ranging from 27.8 wt% to 59.0 wt%; preferably from 30.6 wt% to 56.6 wt%; more preferably ranging from 35.7.8 wt% to 54.9 wt%;

said polypropylene composition (B) being further characterized by:

  - a Melt Flow Rate (ISO 1133 230°C/5.0 kg) ranging from 26.8 to 57.2 g/10 min; preferably from 29.4 to 54.6 g/10 min; more preferably ranging from 31.8 to 52.2 g/10 min;
  - an amount of fraction soluble in xylene at 25°C ranging from 8.0 wt% to 31.0 wt% preferably from 10.0 wt% to 26.0 wt% ; more preferably from 12.0 wt% to 24.0 wt%;
  - intrinsic viscosity fraction soluble in xylene at 25°C, measured in tetrahydronaphthalene at 135 °C, ranging from 1.2 to 3.8 dl/g; preferably from 1.5 to 3.4 dl/g; more preferably ranging from 1.8 to 3.0 dl/g; and,

- total content of ethylene measured according to $^{13}$C-NMR method described in the specification, ranging from 4.5 wt% to 18.5 wt%; preferably from 5.5 wt% to 15.8 wt%; more preferably ranging from 6.5 wt% to 13.7 wt%;

in the said composition the sum of b1) and b2), being referred to the total weight of b1) and b2), is 100, and the sum of the amounts of (A) and (B) being referred to the total weight of (A) and (B) is 100;

The recycled polypropylene composition (A) has:

a propylene content, measured with $^{13}$C-NMR, higher than 50 wt%, preferably higher than 55 wt%; more preferably ranging from 60 wt% to 95 wt%;

Melt Flow Rate (ISO 1133 230°C/2.16 kg) ranging from 5.0 to 100.0 g/10 min; preferably ranging from 15.0 to 90.0 g/10 min; more preferably ranging from 20.0 to 70.0 g/10 min

Tensile modulus, measured according to ISO 527-2, ranging from 800 $N/mm^2$ to 1700 $N/mm^2$; preferably ranging from 1000 $N/mm^2$ to 1500 $N/mm^2$; more preferably Tensile modulus, measured according to ISO 527-2, ranging from 1200 $N/mm^2$ to 1400 $N/mm^2$;

Charpy impact test at 23°C, determined according to ISO 179-1eA, and ISO 1873-2, ranging from 4.0 $KJ/m^2$ to 12.0 $KJ/m^2$; preferably ranging from 4.8 $KJ/m^2$ to 10.0 $KJ/m^2$; more preferably ranging from 5.5 $KJ/m^2$ to 7.3 $KJ/m^2$

Elongation at break, measured according to ISO 527, ranging from 30 % to 90 %; preferably ranging from 35 % to 80 %; more preferably ranging from 38 % to 71 %

the FTIR spectrum of film recorded as described in the example section comprises at least two adsorption bands at least two wavenumbers (cm-1) selected from:

3303 ±2 cm-1; 1726 ±2 , 1642 ±2 cm-1; 1600 ±2 $cm^{-1}$ 1550 ±2 cm-1; 1491±2 cm-1; 1451±2 cm-1; 1726 ±2 cm-1; 1600 ±2 cm-1, 748 ±2 cm-1; 906 ±2 $cm^{-1}$; 839 ±2 $cm^{-1}$, 818 ±2 $cm^{-1}$; 748 ±2 $cm^{-1}$; 695 ±2 $cm^{-1}$.

The term "copolymer" as used herein refers to polymers with two different recurring units.

The term "recycled" is used to designate polymer materials deriving from at least one cycle of processing into manufactured articles, as opposed to virgin polymers that is a polymer not subjected at least one cycle of processing into manufactured articles.

The term "consisting essentially of', as used herein in connection with a polymer or polymer composition means that, in addition to those components which are mandatory, other components may also be present in the polymer or in the polymer composition, provided that the essential characteristics of the polymer or of the composition are not materially affected by their presence. According to the present disclosure, examples of components that, when present in customary amounts in a polymer or in a polymer composition, do not materially affect their characteristics are the catalyst residues, antistatic agents, melt stabilizers, light stabilizers, antioxidants, antiacids.

The features of the components forming the polypropylene composition are not inextricably linked to each other. This means that a certain level of preference of one the features should not necessarily involve the same level of preference of the remaining features of the same or different components. On the contrary, it is intended in the present disclosure that any component (A) to (B) and any preferred range of features of components (A) to (B) can be combined with any preferred range of one or more of the features of components (A) to (B) and with any possible additional component, and its features, described in the present disclosure.

Component B) can be prepared by polymerizing propylene, optionally in mixture with ethylene in the presence of a catalyst comprising the product of the reaction between:

i) a solid catalyst component comprising Ti, Mg, Cl, and at least an internal electron donor compound;
ii) an alkylaluminum compound and,
iii) an external electron-donor compound having the general formula:
$(R^7)_a(R^8)_b Si(OR^9)_c$, where a and b are integers from 0 to 2, c is an integer from 1 to 4 and the sum (a+b+c) is 4; $R^7$, $R^8$, and $R^9$, are alkyl, cycloalkyl or aryl radicals with 1-18 carbon atoms optionally containing heteroatoms.

The internal donor is preferably selected from the esters of mono or dicarboxylic organic acids such as benzoates, malonates, phthalates and certain succinates. Examples of internal donors are described in US 4522930A, EP 045977A2 and international patent applications WO 00/63261 and WO 01/57099. Particularly suited are the phthalic acid esters and succinate acids esters. Alkylphthalates are preferred, such as diisobutyl, dioctyl and diphenyl phthalate and benzyl-butyl phthalate.

The particles of solid component (i) may have substantially spherical morphology and average diameter ranging between 5 and 150 $\mu$m, preferably from 20 to 100 $\mu$m and more preferably from 30 to 90 $\mu$m. As particles having substantially spherical morphology, those are meant wherein the ratio between the greater axis and the smaller axis is equal to or lower than 1.5 and preferably lower than 1.3.

The amount of Mg may preferably range from 8 to 30% more preferably from 10 to 25wt. %.

The amount of Ti may range from 0.5 to 7% and more preferably from 0.7 to 5wt. %.

According to one method, the solid catalyst component (i) can be prepared by reacting a titanium compound of formula Ti(OR)q-yXy, where q is the valence of titanium and y is a number between 1 and q, preferably TiCl4, with a magnesium chloride deriving from an adduct of formula MgCl2•pROH, where p is a number between 0.1 and 6, preferably from 2 to 3.5, and R is a hydrocarbon radical having 1-18 carbon atoms. The adduct can be suitably prepared in spherical form by mixing alcohol and magnesium chloride, operating under stirring conditions at the melting temperature of the adduct (100-130°C). Then, the adduct is mixed with an inert hydrocarbon immiscible with the adduct thereby creating an emulsion which is quickly quenched causing the solidification of the adduct in form of spherical particles. Examples of spherical adducts prepared according to this procedure are described in USP 4,399,054 and USP 4,469,648. The so obtained adduct can be directly reacted with Ti compound or it can be previously subjected to thermal controlled dealcoholation (80-130°C) so as to obtain an adduct in which the number of moles of alcohol is of lower than 3, preferably between 0.1 and 2.5. The reaction with the Ti compound can be carried out by suspending the adduct (dealcoholated or as such) in cold TiCl4; the mixture is heated up to 80-130°C and kept at this temperature for 0.5-2 hours. The treatment with TiCl4 can be carried out one or more times. The electron donor compound can be added in the desired ratios during the treatment with TiCl4.

The alkyl-Al compound (ii) is preferably chosen among the trialkyl aluminum compounds such as for example triethylaluminum, triisobutylaluminum, tri-n-butylaluminum, tri-n-hexylaluminum, tri-n-octylaluminum. It is also possible to use alkylaluminum halides, alkylaluminum hydrides or alkylaluminum sesquichlorides, such as AlEt2Cl and Al2Et3Cl3, possibly in mixture with the above cited trialkylaluminums. The Al/Ti ratio is higher than 1 and may preferably range between 50 and 2000.

Particularly preferred are the silicon compounds (iii) in which a is 1, b is 1, c is 2, at least one of R7 and R8 is selected from branched alkyl, cycloalkyl or aryl groups with 3-10 carbon atoms optionally containing heteroatoms and R9 is a C1-C10 alkyl group, in particular methyl. Examples of such preferred silicon compounds are methylcyclohexyldimethoxysilane (C donor), diphenyldimethoxysilane, methyl-t-butyldimethoxysilane, dicyclopentyldimethoxysilane (D donor), diisopropyldimethoxysilane, (2-ethylpiperidinyl)t-butyldimethoxysilane, (2-ethylpiperidinyl)thexyldimethoxysilane, (3,3,3-trifluoro-n-propyl)(2-ethylpiperidinyl)dimethoxysilane, methyl(3,3,3-trifluoro-n-propyl)dimethoxysilane. Moreover, are also preferred the silicon compounds in which a is 0, c is 3, R8 is a branched alkyl or cycloalkyl group, optionally containing heteroatoms, and R9 is methyl. Examples of such preferred silicon compounds are cyclohexyltrimethoxysilane, t-butyltrimethoxysilane and thexyltrimethoxysilane.

The external electron donor compound (iii) is used in such an amount to give a molar ratio between the organoaluminum compound and said external electron donor compound (iii) of from 0.1 to 200, preferably from 1 to 100 and more preferably from 3 to 50.

Component B) can be prepared in a continuous sequential polymerization process, wherein component b1) is prepared in the first reactor and component (b2) is prepared in the second and third reactor in the presence of component (b1) according to the known techniques and operating in gas phase, or in liquid phase in the presence or not of inert diluent, or by mixed liquid-gas techniques.

Preferably components (b1), (b2) , are prepared in gas phase reactors.

Component B) is preferably a commercial polymer grade such as Moplen EP448S sold by Lyondellbasell.

Component (A) can be a Post-Industrial Resin (PIR) or a Post-Consumer Resin (PCR).

Post-Industrial Resin (PIR) is the waste generated from the manufacturing process that is reclaimed or used again in the same material.

Post-Consumer Resin (PCR) defined as recyclate derived from an end product that has completed its life cycle as a consumer item and would otherwise be disposed of as waste.

If needed, the final composition comprising (A)+(B) can be subject to a chemical treatment with organic peroxides in order to lower the average molecular weight and increase the melt flow index up to the value needed for the specific application.

The whole polypropylene composition of the present disclosure preferably shows a tensile modulus value higher than that of component B). Preferably embodiment, the tensile modulus of the whole propylene polymer composition ranges from to 740 MPa to 2000 MPa more preferably from 940 to 1850 MPa; even more preferably from 1090 to 1690 MPa .

The value of Charpy impact at 23°C preferably ranges from 4.3 KJ/m$^2$ to 18.5 KJ /m$^2$ ; more preferably it ranges from 5.5 KJ /m$^2$ to 15.1 KJ / m$^2$; even more preferably it ranges from 6.5 KJ /m$^2$ to 10.1 KJ / m$^2$.

The elongation at break of the composition of the present invention can be improved with respect to the elongation at break of component A). In particular in the range claimed the elongation at break unexpected is higher with respect to the composition containing less component A).

Preferably the elongation at break ranges from 25 % to 80 %; more preferably from 30% to 75%, even more preferably from 35% to 70%

The whole propylene composition of the present disclosure can be obtained by mechanical blending of the components (A) and (B) according to conventional techniques.

The final composition comprising the components (A) and (B) may be added with conventional additives, fillers and pigments, commonly used in olefin polymers such as nucleating agents, extension oils, mineral fillers, and other organic and inorganic pigments. In particular, the addition of inorganic fillers, such as talc, calcium carbonate and mineral fillers, also brings about an improvement to some mechanical properties, such as flexural modulus and HDT. Talc can also have a nucleating effect.

The nucleating agents may be added to the compositions of the present disclosure in quantities ranging from 0.05 wt% to 2 wt%, more preferably from 0.1 wt% to 1 wt%, with respect to the total weight, for example.

The propylene polymer composition of the present disclosure can be for the production of injection molding articles in particular in the automotive field.

The following examples are given in order to illustrate, but not limit the present disclosure.

## EXAMPLES

## CHARACTERIZATIONS

### Xylene-soluble (XS) Fraction at 25 °C

2.5 g of polymer and 250 ml of xylene are introduced in a glass flask equipped with a refrigerator and a magnetic stirrer. The temperature is raised in 30 minutes up to the boiling point of the solvent. The resulting clear solution is then kept under reflux and stirred for 30 minutes. The closed flask is then kept for 30 minutes in a bath of ice and water, then in a thermostatic water bath at 25 °C for 30 minutes. The resulting solid is filtered on quick filtering paper. 100 ml of the filtered liquid is poured in a previously weighed aluminum container, which is heated on a heating plate under nitrogen flow to remove the solvent by evaporation. The container is then kept on an oven at 80 °C under vacuum until a constant weight is obtained. The weight percentage of polymer soluble in xylene at room temperature is then calculated.

The content of the xylene-soluble fraction is expressed as a percentage of the original 2.5 grams and then, by the difference (complementary to 100%), the xylene insoluble percentage (%).

### Melt Flow Rate (MFR)

Measured according to ISO 1133-1 at 230 °C with a load of 2.16 kg or 5 kg, as specified.

### Intrinsic Viscosity (IV)

The sample is dissolved in tetrahydronaphthalene at 135 °C and then poured into a capillary viscometer. The viscometer tube (Ubbelohde type) is surrounded by a cylindrical glass jacket; this setup allows for temperature control with a circulating thermostatic liquid. The downward passage of the meniscus is timed by a photoelectric device.

The passage of the meniscus in front of the upper lamp starts the counter which has a quartz crystal oscillator. The meniscus stops the counter as it passes the lower lamp and the efflux time is registered: this is converted into a value of intrinsic viscosity through Huggins' equation (Huggins, M.L., J. Am. Chem. Soc., 1942, 64, 2716) provided that the flow time of the pure solvent is known at the same experimental conditions (same viscometer and same temperature). One single polymer solution is used to determine $[\eta]$.

**Polydispersity index:** Determined at a temperature of 200 °C by using a parallel plates rheometer model RMS-800 marketed by RHEOMETRICS (USA), operating at an oscillation frequency which increases from 0.1 rad/sec to 100 rad/sec. From the crossover modulus one can derive the P.I. by way of the equation:

$$P.I.= 105/Gc$$

in which Gc is the crossover modulus which is defined as the value (expressed in Pa) at which G'=G" wherein G' is the storage modulus and G' is the loss modulus.

### Ethylene (C2) content

### $^{13}$C NMR of propylene/ethylene copolymers

$^{13}$C NMR spectra were acquired on a Bruker AV-600 spectrometer equipped with cryoprobe, operating at 160.91 MHz in the Fourier transform mode at 120°C.

The peak of the $S_{\beta\beta}$ carbon (nomenclature according to "Monomer Sequence Distribution in Ethylene-Propylene Rubber Measured by 13C NMR. 3. Use of Reaction Probability Mode " C. J. Carman, R. A. Harrington and C. E. Wilkes, Macromolecules, 1977, 10, 536) was used as internal reference at 29.9 ppm. The samples were dissolved in 1,1,2,2-tetrachloroethane-d2 at 120°C with a 8 % wt/v concentration. Each spectrum was acquired with a 90° pulse, 15 seconds of delay between pulses and CPD to remove 1H-13C coupling. 512 transients were stored in 32K data points using a spectral window of 9000 Hz.

The assignments of the spectra, the evaluation of triad distribution and the composition were made according to Kakugo ("Carbon-13 NMR determination of monomer sequence distribution in ethylene-propylene copolymers prepared with δ-titanium trichloride-diethylaluminum chloride" M. Kakugo, Y. Naito, K. Mizunuma and T. Miyatake, Macromolecules 1982, 15, 4, 1150-1152) using the following equations:

$$PPP = 100\ T_{\beta\beta}/S \qquad PPE = 100\ T_{\beta\delta}/S \qquad EPE = 100\ T_{\delta\delta}/S$$
$$PEP = 100\ S_{\beta\beta}/S \qquad PEE = 100\ S_{\beta\delta}/S \qquad EEE = 100\ (0.25\ S_{\gamma\delta}+0.5\ S_{\delta\delta})/S$$

$$S = T_{\beta\beta} + T_{\beta\delta} + T_{\delta\delta} + S_{\beta\beta} + S_{\beta\delta} + 0.25\ S_{\gamma\delta} + 0.5\ S_{\delta\delta}$$

The molar percentage of ethylene content was evaluated using the following equation:

$$E\%\ mol = 100 * [PEP+PEE+EEE]$$

The weight percentage of ethylene content was evaluated using the following equation:

$$E\%\ wt. = \frac{100 * E\%\ mol * MW_E}{E\%\ mol * MW_{E} + P\%\ mol * MW_P}$$

where P% mol is the molar percentage of propylene content, while $MW_E$ and $MW_P$ are the molecular weights of ethylene and propylene, respectively.

The product of reactivity ratio $r_1r_2$ was calculated according to Carman (C.J. Carman, R.A. Harrington and C.E. Wilkes, Macromolecules, 1977; 10, 536) as:

$$r_1r_2 = 1 + \left(\frac{EEE+PEE}{PEP}+1\right) - \left(\frac{P}{E}+1\right)\left(\frac{EEE+PEE}{PEP}+1\right)^{0.5}$$

The tacticity of Propylene sequences was calculated as mm content from the ratio of the PPP $mmT_{\beta\beta}$ (28.90-29.65 ppm) and the whole $T_{\beta\beta}$ (29.80-28.37 ppm).

## FTIR Spectrum

The IR spectrum was determined by infrared (IR) spectroscopy by recording the sample against a background level of air with a Fourier transform infrared (FTIR) spectrometer. The data acquisition parameters of the instrument were:

- purge time: 30 seconds minimum
- collection time: 3 minutes minimum
- apodization: Happ-Genzel
- resolution: 2 cm-1.

Sample preparation - Using a hydraulic press, a thick sheet was obtained by compression molding approximately 1 g sample between two sheets of aluminum foil. A small portion of the resulting sheet was cut to form a film. The film thickness was set to have a maximum absorbance of the CH 2 absorption band at ~720 cm-1 of 1.3 au (% Transmittance > 5%). Molding conditions were performed at a temperature of approximately 180 ± 10°C (356°F) and a pressure of approximately 10 kg/cm2 (142.2 psi) for approximately one minute. After the pressure was released, the sample was removed from the press and cooled to room temperature. The spectrum of the pressed film was recorded as a function of absorbance versus wavenumbers (cm-1).

**Samples for the mechanical tests**

Samples have been obtained according to ISO 1873-2:2007.

**Charpy impact test** is determined according to ISO 179-1eA, and ISO 1873-2
**Elongation at yield:** measured according to ISO 527.
**Elongation at break:** measured according To ISO 527
**Stress at break:** measured according to ISO 527.
**Tensile Modulus** according to ISO 527-2,

**Melting point and crystallization point**

The melting point has been measured by using a DSC instrument according to ISO 11357-3, at scanning rate of 20C/min both in cooling and heating, on a sample of weight between 5 and 7 mg., under inert $N_2$ flow. Instrument calibration made with Indium.

EXAMPLES

**Example 1**

**Component A)**

Component A is recycled polymer grade sold by Vita plastics having an MFR of 51 g/10 min. The properties of the polymer are reported on table 1.

Table 1

| Component A | |
|---|---|
| MFR, 2.16 kg g/10 min | 51 |
| Tensile Modulus; (N/mm$^2$) | 1330 |
| Charpy impact 23°C KJ/ m$^2$ | 6.9 |
| elongation at break % | 43 |
| Propylene C3 content wt% | >60 |

**Component B)**

Component B is a commercial grade Moplen E448S, it can be synthesized according to the procedure known in the art, Moplen EP448S has the property set forth in table 2.

Table 2

| | | |
|---|---|---|
| component b1) | | |
| XS | wt% | <3.0 |
| MFR 230°C/2.16 kg | g/10 min | 83 |
| split | wt% | 84 |
| component b2) | | |
| C2 content | wt% | 46 |
| split | wt% | 16 |
| total composition | | |

(continued)

| component b2) | | |
| --- | --- | --- |
| MFR 230°C/5 kg | g/10 min | 51.0 |
| XS | wt% | 16 |
| IV on XS | dl/g | 2.3 |
| C2 content | wt% | 7.5 |
| XS fraction soluble in xylene at 25°C<br>C2 ethylene derived units<br>IV intrinsic viscosity | | |

50 wt% of component A) has been blended with 50 wt% of component B) in an extruder (Berstorff extruder), 1000 ppm of M.S. 168 and 3000 ppm of DHT-4A based on the total weight of A + B have been added. The polymer particles are extruded under nitrogen atmosphere in a twin screw extruder, at a rotation speed of 250 rpm and a melt temperature of 200-250° C. The characterization of the obtained composition is reported in table 3.

Table 3

| | A | B | ex 1 | comp ex 2 | Comp ex 3 |
| --- | --- | --- | --- | --- | --- |
| Component A | 100 | | 50 | 30 | 70 |
| Component B | | 100 | 50 | 70 | 30 |
| MFR, 2.16 kg g/10 min | 51.0 | 47.0 | 53.0 | 47.0 | 48.0 |
| Tensile Modulus; (N/mm$^2$) | 1330 | 1250 | 1410 | 1430 | 1460 |
| Charpy impact test at 23°C KJ/m$^2$ | 6.9 | 6.8 | 7.5 | 6.6 | 7.3 |
| elongation at break % | 43 | 42 | 49 | 40.4 | 35.6 |

The polymer compositions according to the present disclosure have an improved balance of mechanical properties with respect to component A) alone. In particular the elongation at break is improved with respect to comparative examples 2 and 3 and also with respect to components A and B alone.

## Claims

1. A polyolefin composition comprising:

   A) from 35 wt% to 65 wt% of a recycled polypropylene composition;
   B) from 35 wt% to 65 wt% of a virgin polypropylene composition comprising:

   (b1) from 69 wt% to 92 wt%, of a propylene homopolymer, having:

   - a fraction soluble in xylene at 25°C lower than 3.0 wt%; and
   - a Melt Flow Rate (ISO 1133 230°C/2.16 kg) ranging from 58 to 118 g/10 min;

   (b2) from 8 wt% to 31 wt % of a copolymer of propylene and ethylene having:

   - units derived from ethylene, measured according to $^{13}$C-NMR, in an amount ranging from 27.8 wt% to 59.0 wt%;
   said polypropylene composition (B) being further **characterized by**:

   - a Melt Flow Rate (ISO 1133 230°C/5.0 kg) ranging from 26.8 to 57.2 g/10 min;
   - an amount of fraction soluble in xylene at 25°C ranging from 8.0 wt% to 31.0 wt%;
   - intrinsic viscosity of the fraction soluble in xylene at 25°C, measured in tetrahydronaphthalene at 135 °C, ranging from 1.2 to 3.8 dl/g and,

- total content of ethylene, measured according to $^{13}$C-NMR method described in the specification, ranging from 4.5 wt% to 18.5 wt%;

in the said composition the sum of b1) and b2), being referred to the total weight of b1) and b2), is 100, and the sum of the amounts of (A) and (B) being referred to the total weight of (A) and (B) is 100; wherein the recycled polypropylene composition (A) has

i) a propylene content higher than 50 wt%

iii) Melt Flow Rate (ISO 1133 230°C/2.16 kg) ranging from 5.0 to 100.0 g/10 min;

iv) Tensile modulus, measured according to ISO 527-2, ranging from 800 N/mm$^2$ to 1700 N/mm$^2$

v) Charpy impact test at 23°C, determined according to ISO 179-1eA, and ISO 1873-2, ranging from 4.0 KJ/m$^2$ to 12.0 KJ/m$^2$;

vi) Elongation at break, measured according to ISO 527, ranging from 30 % to 90 %;

vii) the FTIR spectrum of film recorded as described in the example section comprises at least two adsorption bands at least two wavenumbers (cm-1) selected from:

3303 $\pm$2 cm-1; 1726 $\pm$2 , 1642 $\pm$2 cm-1; 1600 $\pm$2 cm$^{-1}$ 1550 $\pm$2 cm-1; 1491$\pm$2 cm-1; 1451$\pm$2 cm-1; 1726 $\pm$2 cm-1; 1600 $\pm$2 cm-1, 748 $\pm$2 cm-1; 906 $\pm$2 cm$^{-1}$; 839 $\pm$2 cm$^{-1}$, 818 $\pm$2 cm$^{-1;}$ 748 $\pm$2 cm$^{-1}$; 695 $\pm$2 cm$^{-1}$.

2. The propylene polymer composition according to claim 1 wherein the component (A) ranges from 40 wt% to 60 wt%; and component (B) ranges from 40 wt% to 60 wt%.

3. The propylene polymer composition according to claims 1 or 2 wherein in component B) component b1) ranges from 74 wt% to 89 wt%; and component b2) ranges from 11 wt% to 26 wt%.

4. The propylene polymer composition according to any of the preceding claims wherein component b1) has a Melt Flow Rate (ISO 1133 230°C/5.0 kg) ranging from 63.0 to 113.5 g/10 min.

5. The propylene polymer composition according to any of the preceding claims wherein in component b2) the units derived from ethylene, measured according to $^{13}$C-NMR, in an amount ranges from 30.6 wt% to 56.6 wt %.

6. The propylene polymer composition according to any of the preceding claims wherein component B) has the Melt Flow Rate (ISO 1133 230°C/5.0 kg) ranging from 29.4 to 54.6 g/10 min;

7. The propylene polymer composition according to any of the preceding claims wherein component (B) has the amount of fraction soluble in xylene at 25°C ranging from 10.0 wt% to 26.0 wt%.

8. The propylene polymer composition according to any of the preceding claims wherein component (B) has the intrinsic viscosity fraction soluble in xylene at 25°C, measured in tetrahydronaphthalene at 135 °C, ranging from 1.5 to 3.4 dl/.

9. The propylene polymer composition according to any of the preceding claims wherein in component (B) the total content of ethylene measured according to $^{13}$C-NMR method ranges from 5.5 wt% to 15.8 wt%.

10. The propylene polymer composition according to a to any of the preceding claims wherein in component A) the melt flow rate (ISO 1133-1 230°C/2.16 kg) of the whole component (A) ranges from 15.0 to 90.0 g/10 min.

11. The propylene polymer composition according to any of the preceding claims wherein in component (A) the total content of propylene, measured according to $^{13}$C-NMR method is higher than 55 wt%.

12. The propylene polymer composition according to any of the preceding claims wherein in component (A) the tensile modulus, measured according to ISO 527-2, ranges from 1000 N/mm$^2$ to 1500 N/mm$^2$.

13. The propylene polymer composition according to any of the preceding claims wherein in component (A) the charpy impact test at 23°C, determined according to ISO 179-1eA, and ISO 1873-2, ranges from 4.8 KJ/m$^2$ to 10.0 KJ/m$^2$.

14. The propylene polymer composition according to any of the preceding claims wherein in component A) the elongation at break, measured according To ISO 527, ranges from 35 % to 80 %.

15. An extruded or injection molded article obtained from the propylene polymer composition according to any of the preceding claims.

Fig 1

Europäisches
Patentamt

European
Patent Office

Office européen
des brevets

# EUROPEAN SEARCH REPORT

**Application Number**

EP 25 15 9341

## DOCUMENTS CONSIDERED TO BE RELEVANT

| Category | Citation of document with indication, where appropriate, of relevant passages | Relevant to claim | CLASSIFICATION OF THE APPLICATION (IPC) |
|---|---|---|---|
| A | EP 4 101 889 B1 (BOREALIS AG [AT]) 20 December 2023 (2023-12-20) * the whole document * | 1-15 | INV. C08L23/12 |
| A | US 2023/287202 A1 (KAHLEN SUSANNE [AT] ET AL) 14 September 2023 (2023-09-14) * the whole document * | 1-15 | |
| A | US 2023/279208 A1 (KAHLEN SUSANNE MARGARETE [AT] ET AL) 7 September 2023 (2023-09-07) * the whole document * | 1-15 | |
| A | WO 2022/034125 A1 (BOREALIS AG [AT]) 17 February 2022 (2022-02-17) * the whole document * | 1-15 | |
| | | | TECHNICAL FIELDS SEARCHED (IPC) |
| | | | C08L |

The present search report has been drawn up for all claims

| Place of search | Date of completion of the search | Examiner |
|---|---|---|
| Munich | 9 July 2025 | Balmer, J |

CATEGORY OF CITED DOCUMENTS

X : particularly relevant if taken alone
Y : particularly relevant if combined with another document of the same category
A : technological background
O : non-written disclosure
P : intermediate document

T : theory or principle underlying the invention
E : earlier patent document, but published on, or after the filing date
D : document cited in the application
L : document cited for other reasons

& : member of the same patent family, corresponding document

EPO FORM 1503 03.82 (P04C01)

## ANNEX TO THE EUROPEAN SEARCH REPORT
## ON EUROPEAN PATENT APPLICATION NO.

EP 25 15 9341

This annex lists the patent family members relating to the patent documents cited in the above-mentioned European search report.
The members are as contained in the European Patent Office EDP file on
The European Patent Office is in no way liable for these particulars which are merely given for the purpose of information.

09-07-2025

| Patent document cited in search report | | Publication date | Patent family member(s) | | Publication date |
|---|---|---|---|---|---|
| EP 4101889 | B1 | 20-12-2023 | BR | 112023025637 A2 | 27-02-2024 |
| | | | CN | 117460774 A | 26-01-2024 |
| | | | EP | 4101889 A1 | 14-12-2022 |
| | | | ES | 2971534 T3 | 05-06-2024 |
| | | | JP | 7600439 B2 | 16-12-2024 |
| | | | JP | 2024520750 A | 24-05-2024 |
| | | | KR | 20240007718 A | 16-01-2024 |
| | | | US | 2024262999 A1 | 08-08-2024 |
| | | | WO | 2022258576 A1 | 15-12-2022 |
| US 2023287202 | A1 | 14-09-2023 | BR | 112023001531 A2 | 28-03-2023 |
| | | | CN | 116134088 A | 16-05-2023 |
| | | | EP | 4196528 A1 | 21-06-2023 |
| | | | US | 2023287202 A1 | 14-09-2023 |
| | | | WO | 2022034127 A1 | 17-02-2022 |
| US 2023279208 | A1 | 07-09-2023 | CN | 115916852 A | 04-04-2023 |
| | | | EP | 3936565 A1 | 12-01-2022 |
| | | | ES | 3028610 T3 | 19-06-2025 |
| | | | TW | 202206534 A | 16-02-2022 |
| | | | US | 2023279208 A1 | 07-09-2023 |
| | | | WO | 2022008434 A1 | 13-01-2022 |
| WO 2022034125 | A1 | 17-02-2022 | CN | 116113666 A | 12-05-2023 |
| | | | EP | 4196527 A1 | 21-06-2023 |
| | | | US | 2023257563 A1 | 17-08-2023 |
| | | | WO | 2022034125 A1 | 17-02-2022 |

EPO FORM P0459

For more details about this annex : see Official Journal of the European Patent Office, No. 12/82

**REFERENCES CITED IN THE DESCRIPTION**

*This list of references cited by the applicant is for the reader's convenience only. It does not form part of the European patent document. Even though great care has been taken in compiling the references, errors or omissions cannot be excluded and the EPO disclaims all liability in this regard.*

**Patent documents cited in the description**

- EP 472946 A
- US 4522930 A
- EP 045977 A2
- WO 0063261 A
- WO 0157099 A
- US 4399054 A
- US 4469648 A

**Non-patent literature cited in the description**

- **HUGGINS, M.L.** *J. Am. Chem. Soc.*, 1942, vol. 64, 2716
- **C. J. CARMAN** ; **R. A. HARRINGTON** ; **C. E. WILKES**. Monomer Sequence Distribution in Ethylene-Propylene Rubber Measured by 13C NMR. 3. Use of Reaction Probability Mode. *Macromolecules*, 1977, vol. 10, 536
- **M. KAKUGO** ; **Y. NAITO** ; **K. MIZUNUMA** ; **T. MIYATAKE**. Carbon-13 NMR determination of monomer sequence distribution in ethylene-propylene copolymers prepared with $\delta$-titanium trichloride-diethylaluminum chloride. *Macromolecules*, 1982, vol. 15 (4), 1150-1152
- **C.J. CARMAN** ; **R.A. HARRINGTON** ; **C.E. WILKES**. *Macromolecules*, 1977, vol. 10, 536